# FASCICULE DE BREVET EUROPEEN

(11) **EP 4 021 721 B1**
(45) Date de publication et mention de la délivrance du brevet: **11.10.2023**
(21) Numéro de dépôt: 20747003.0
(22) Date de dépôt: 04.08.2020
(51) Int. Cl.: B32B 17/10, B32B 17/06, E06B 3/66, H05B 3/84

(54) **VITRAGE ISOLANT CHAUFFANT À FAIBLE PUISSANCE ET RÉSISTANCE MÉCANIQUE ÉLEVÉE**
BEHEIZBARE ISOLIERTE VERGLASUNG MIT NIEDRIGER LEISTUNG UND HOHER MECHANISCHER FESTIGKEIT
HEATABLE INSULATING GLAZING WITH LOW POWER AND HIGH MECHANICAL STRENGTH

(30) Priorité: 30.08.2019 FR 1909538
(43) Date de publication de la demande: 06.07.2022
(73) Titulaire: Saint-Gobain Glass France, 92400 Courbevoie (FR)
(72) Inventeur: TONDU, Thomas, 45110 Saint-Martin-d'Abbat (FR)
(74) Mandataire: Saint-Gobain Recherche
(86) Numéro de dépôt international: PCT/EP2020/071864
(87) Numéro de publication internationale: WO 2021/037496

(56) Documents cités:
- WO-A2-2007/003849
- CN-B- 105 538 833
- FR-A1- 2 201 265

## Description

La présente invention concerne le domaine du vitrage, et porte plus particulièrement sur un vitrage isolant chauffant à puissance de chauffage diminuée et à résistance mécanique élevée.

Les cockpits aéronautiques sont munis classiquement de deux vitrages centraux et de quatre ou six vitres latérales. Tous ces vitrages sont potentiellement exposés à des problèmes de buée ou givre qui nécessitent un chauffage.

Pour des raisons aérodynamiques, les vitrages frontaux sont exposés au givre sur leur face extérieure, ce qui impose des puissances élevées et de facto prévient le risque de formation de buée (ou givre) sur la face interne de ces vitrages.

A l'inverse, les latérales n'étant généralement pas exposées au givrage sur leur face extérieure ne sont pas équipées de chauffage antigivre. Il faut alors y intégrer un système chauffant spécifiquement dédié à la gestion de buée (ou de givre) sur la paroi interne du vitrage (côté cockpit). Outre la gestion de la buée (et éventuellement du givre) sur la face intérieure du vitrage (bonne visibilité), ce chauffage apporte un confort significatif au pilote en évitant/limitant la sensation de paroi froide.

Les vitres latérales des cockpits aéronautiques sont constituées de verres organiques ou minéraux feuilletés. Ces vitrages sont constitués de deux ou trois plis et sont donc chauffants. On entend communément par « pli » une feuille de verre minéral ou organique (matériau polymère transparent) constituant un vitrage, à l'exclusion des couches adhésives intercalaires collant les plis les uns aux autres deux à deux.

Il existe également exceptionnellement des vitrages plastiques (matériaux polymères organiques) dépourvus de système de chauffage grâce à l'emploi d'un double vitrage. Ceci est rendu possible par l'usage de plastique présentant de bonnes performances d'isolation thermique par rapport aux vitrages en verre.

Enfin le soufflage d'air chaud participe également à la gestion de l'absence de buée.

Paradoxalement la puissance de chauffage (à fonction antibuée) dissipée dans les vitrages feuilletés est évacuée vers l'extérieur de l'avion alors que le chauffage a pour but de réchauffer la peau interne du feuilleté. Ceci est dû au grand froid (typiquement -50°C) et à la convection élevée associée à la vitesse de l'écoulement de l'air extérieur. Ceci impose d'appliquer des puissances spécifiques de 1500 à 2000 W/m² . Pour autant en vol, la paroi interne reste froide (autour de 0°C) et constitue un environnent désagréable pour les pilotes. Cet effet de paroi froide est d'autant plus marqué que le cockpit est petit (les vitres sont alors très proches des pilotes, qui peuvent avoir la sensation que le vitrage est trop chaud au sol, trop froid en vol).

Ces puissances élevées imposent l'utilisation soit de systèmes de chauffage à base de fils fins qui sont peu fiables (rupture de fatigue), peu esthétiques et engendrent une gêne visuelle (flou en chauffe, diffraction),
soit de tension d'alimentation permettant de chauffer au moyen de couches conductrices (meilleure qualité que les fils). Or pour délivrer des puissances spécifiques de l'ordre de 1500 W/m² dans ces couches, l'accès à une tension d'alimentation élevée est nécessaire. Il s'agit d'une contrainte forte notamment sur les petits avions, qui utilisent à titre d'exemple des tensions de 28 V.

Les rares vitrages plastiques constituant un double vitrage permettant de s'affranchir du chauffage induisent une épaisseur de vitrage accrue et une masse également accrue car l'absence de feuilletage décorrèle mécaniquement les plis ce qui dégrade très sensiblement leurs performance mécanique (choc oiseau et pression).

De plus la performance des doubles vitrages est significativement accrue par l'usage d'une couche réfléchissante infra rouge, ce qui peut difficilement être obtenu sur un plastique sans dégrader significativement la transmission lumineuse. Sur plastique, des couches argent Ag, or Au peuvent être déposées relativement facilement sans dégrader la qualité optique de transparence du substrat, mais non une couche d'oxyde d'indium dopé à l'étain ITO, par exemple. Enfin des formes complexes de vitrages imposent des dépôts de couche d'épaisseur hétérogène, ce qui dans le cas de l'or ou de l'argent induit des hétérogénéités d'aspect et de transmission lumineuse.

Par ailleurs l'intégration d'éléments chauffants sur les latérales se fait sur les plis dits structuraux, les plus épais, qui assurent la sécurité des pilotes. Une défaillance électrique pourrait entraîner une rupture d'un voire deux plis structuraux, ce qui mettrait le vol en danger. Pour cette raison une pratique courante est de chauffer la face orientée vers l'extérieur du pli structural extérieur, pour éviter de positionner le système de chauffage entre deux plis structuraux. La fonction de chauffage de la face intérieure du vitrage est ainsi déportée relativement loin de cette face intérieure, ce qui se fait au détriment de la puissance thermique. FR2201265 divulgue un vitrage isolant constitué d'un premier vitrage feuilleté constitué de deux feuilles de verre de 1,5 mm d'épaisseur collées l'une à l'autre au moyen d'une couche adhésive intercalaire, d'un second vitrage feuilleté constitué de cinq feuilles de verre d'épaisseur respectives de 10,5,5,4 et 3 mm, collées l'une à l'autre au moyen d'une couche adhésive intercalaire, et d'un espace intermédiaire rempli d'air déshydraté entre le premier et le second vitrages feuilletés. Le second vitrage est un vitrage structural avec de la résistance mécanique.

L'invention a pour objectif d'éviter tous ces écueils, et vise notamment à réduire considérablement la puissance dissipée dans les vitres latérales tout en maintenant une température de paroi interne plus élevée ainsi que la résistance mécanique requise dans les conditions d'utilisation particulières d'un vol.

A cet effet, l'invention a pour objet un vitrage isolant constitué d'un premier vitrage feuilleté constitué de deux feuilles de verre d'épaisseur au plus égale à 2 mm chacune, collées l'une à l'autre au moyen d'une couche adhésive intercalaire, d'un second vitrage feuilleté structural assurant la résistance mécanique requise dans les conditions d'un vol (avion...), en particulier la tenue au choc oiseau et une bonne maîtrise de la déformation du vitrage dans les conditions de différence de pressions d'un vol de part et d'autre du vitrage isolant, et d'une lame de gaz entre le premier et le second vitrages feuilletés, le premier vitrage feuilleté étant muni d'un système de chauffage.

La partie mince (premier vitrage feuilleté) est munie d'un système de chauffage permettant de maintenir la paroi intérieure du vitrage isolant à une température proche de 20°C avec une puissance de chauffage très réduite par rapport à celle généralement appliquée sur les vitrages latéraux.

Cet assemblage décorrèle totalement la partie du vitrage à fonction mécanique (partie épaisse : second vitrage feuilleté structural) de la partie à fonction thermique (premier vitrage feuilleté) réduisant ainsi les risques de défaillance mécanique.

Le gaz de la lame de gaz peut être de l'air, un gaz rare tel que néon, argon, krypton...

Le système de chauffage est avantageusement supporté par la surface du premier vitrage feuilleté délimitant une surface partielle de la lame de gaz.

De préférence, le premier et le second vitrages feuilletés sont maintenus ensemble au moyen d'un espaceur notamment en forme de cadre, de manière à former la lame de gaz entre le premier et le second vitrages feuilletés.

De préférence, le second vitrage feuilleté structural comprend au moins une feuille de verre d'épaisseur au moins égale à 4 mm, feuilletée de part et d'autre à une feuille de verre au moyen d'une couche adhésive intercalaire.

De préférence, les deux feuilles de verre constituant le premier vitrage feuilleté ont chacune une épaisseur au plus égale à 1,5, de préférence 1 et de manière particulièrement préférée 0,8 mm.

De préférence, le système de chauffage est une couche électroconductrice de type oxyde d'indium dopé à l'étain (ITO).

De préférence, les feuilles de verre qui constituent le vitrage isolant sont en verre sodocalcique, aluminosilicate ou borosilicate, éventuellement trempé thermiquement ou trempé chimiquement (dit aussi « renforcé chimique »), ou en matériau polymère transparent tel que poly(méthacrylate de méthyle) (PMMA), polycarbonate (PC), polyuréthane ou polyurée (PU).

De préférence, les couches adhésives intercalaires qui constituent le vitrage isolant sont en polyvinylbutyral (PVB), polyuréthane thermoplastique (TPU), éthylène acétate de vinyle (EVA), éventuellement multicouche telle qu'à fonction d'amortissement acoustique.

La souplesse du premier vitrage feuilleté, assez mince, permet en se déformant d'accommoder les variations de pression, de telle sorte que la pression à l'extérieur du vitrage isolant du côté du premier vitrage feuilleté (fin) soit égale à la pression de la lame de gaz (isobare). Cependant, de préférence, la lame d'air est séparée du volume extérieur au vitrage isolant du côté du premier vitrage feuilleté de manière hermétique et étanche au moyen d'une membrane souple gonflable. Grâce à cet évent gonflable, il n'y a pas d'échange de gaz entre l'atmosphère extérieure du vitrage isolant du côté du premier vitrage feuilleté et la lame de gaz, pas de condensation d'humidité sur la surface du second vitrage feuilleté structural délimitant une surface partielle de la lame de gaz.

Un autre objet de l'invention consiste en l'application d'un vitrage isolant décrit ci-dessus comme vitrage de véhicule aérien, le premier vitrage feuilleté étant orienté vers le volume intérieur du véhicule et le second vitrage feuilleté vers l'atmosphère extérieure. L'invention vise particulièrement une telle application comme vitrage latéral de cockpit d'avion.

Afin de mieux illustrer l'objet de la présente invention, on va en décrire ci-après un mode de réalisation particulier, en référence au dessin annexé.

Sur ce dessin :

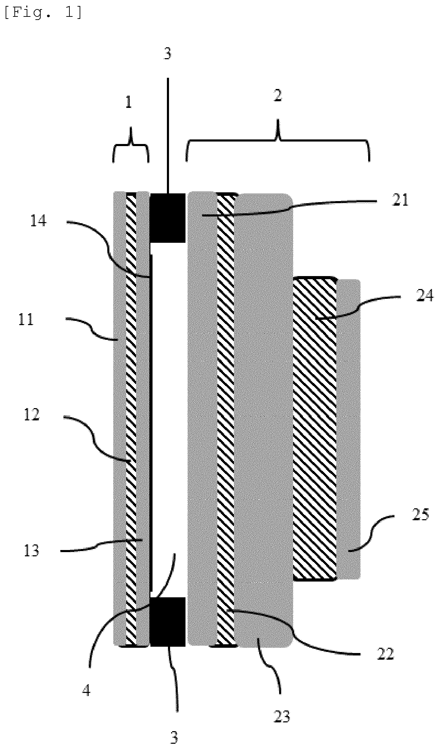

[Fig. 1] représente une vue schématique en coupe d'un vitrage isolant selon la présente invention.

Si l'on se réfère à la Figure 1, on peut voir que l'on y a représenté un vitrage isolant selon un mode de réalisation de l'invention.

Le vitrage isolant est constitué d'un assemblage d'un premier vitrage feuilleté 1 et d'un second vitrage feuilleté 2 structural séparés par une cavité 4 de 2 mm d'épaisseur, renfermant de l'air.

Le premier vitrage feuilleté 1 est constitué de deux feuilles de verre monolithiques 11, 13 de 0,5 mm d'épaisseur, séparées par une couche adhésive intercalaire 12 de 0,38 mm d'épaisseur.

La surface libre de la feuille de verre 13, en vis-à-vis du second vitrage feuilleté 2 structural, supporte une couche conductrice 14 à fonction chauffante et réfléchissante de rayonnement infra-rouge bas-émissive en oxyde d'indium dopé à l'étain (Indium Tin Oxide en anglais - ITO -) de 5 Ohm/carré.

En partant de la lame d'air 4 vers la surface libre du vitrage isolant, le second vitrage feuilleté 2 structural est constitué d'une feuille de verre 21 de 3 mm d'épaisseur collée à une feuille de verre 23 de 8 mm d'épaisseur au moyen d'une couche adhésive intercalaire 22 de 2 mm d'épaisseur, et d'une feuille de verre 25 de 3 mm d'épaisseur collée à la feuille de verre 23 par une couche adhésive intercalaire 24 de 3 mm d'épaisseur.

Le premier 1 et le second 2 vitrages feuilletés sont maintenus ensemble avec un écartement de 2 mm de manière à constituer la lame d'air 4, au moyen d'un cadre espaceur 3.

Toutes les feuilles de verre sont choisies entre des feuilles en verre aluminosilicate ou sodocalcique, trempé chimiquement ou thermiquement. Les couches adhésives intercalaires sont choisies entre des couches en polyuréthane thermoplastique TPU est des couches en polyvinylbutyral PVB, éventuellement multicouche à fonction d'amortissement acoustique.

La hauteur et la largeur du vitrage isolant sont de l'ordre de 60 cm.

En position de montage du vitrage isolant en vitrage latéral de cockpit d'avion, le premier vitrage feuilleté 1 est orienté vers le cockpit et le second vitrage feuilleté 2 en contact avec l'atmosphère extérieure.

Dans les conditions suivantes : convection interne de 7W/m²/°C et air à 20°C convection externe de 110W/m²/°C et air à -50°C, la solution proposée permet avec une puissance de 500W/m² de maintenir une température de peau interne (surface libre de la feuille de verre 11 = face intérieure du vitrage isolant) de 11°C alors que 2300W sont nécessaires en absence de double vitrage (isolant) avec un chauffage sur la face externe du verre médian des vitrages feuilletés classiques (c'est-à-dire de la seconde feuille de verre en partant de l'extérieur).

La plus faible puissance est compatible avec une alimentation 28V (standard).

La faible puissance peut permettre de s'affranchir de sondes de régulation (cause de panne)

Ce système améliore la réparabilité de la partie chauffante du vitrage.

Les plis mécaniques sont également protégés vis-à-vis de la rayure pouvant entraîner la casse du vitrage.

La fonction bas-émissive de la couche chauffante 14 en ITO, en réfléchissant le rayonnement infra-rouge, garde la chaleur dans l'avion.

## Revendications

1. - Vitrage isolant constitué d'un premier vitrage feuilleté (1) constitué de deux feuilles de verre (11, 13) d'épaisseur au plus égale à 2 mm chacune, collées l'une à l'autre au moyen d'une couche adhésive intercalaire (12), d'un second vitrage feuilleté (2) structural assurant la résistance mécanique requise dans les conditions d'un vol, en particulier la tenue au choc oiseau et une bonne maîtrise de la déformation du vitrage dans les conditions de différence de pressions d'un vol de part et d'autre du vitrage isolant, et d'une lame de gaz (4) entre le premier (1) et le second (2) vitrages feuilletés, le premier vitrage feuilleté (1) étant muni d'un système de chauffage (14) .

2. - Vitrage isolant selon la revendication 1, **caractérisé en ce que** le premier (1) et le second (2) vitrages feuilletés sont maintenus ensemble au moyen d'un espaceur (3) notamment en forme de cadre, de manière à former la lame de gaz (4) entre le premier (1) et le second (2) vitrages feuilletés.

3. - Vitrage isolant selon l'une des revendications précédentes, **caractérisé en ce que** le second vitrage feuilleté (2) structural comprend au moins une feuille de verre (23) d'épaisseur au moins égale à 4 mm, feuilletée de part et d'autre à une feuille de verre (21) au moyen d'une couche adhésive intercalaire (22), et à une feuille de verre (25) au moyen d'une couche adhésive intercalaire (24).

4. - Vitrage isolant selon l'une des revendications précédentes, **caractérisé en ce que** les deux feuilles de verre (11, 13) constituant le premier vitrage feuilleté (1) ont chacune une épaisseur au plus égale à 1,5, de préférence 1 et de manière particulièrement préférée 0,8 mm.

5. - Vitrage isolant selon l'une des revendications précédentes, **caractérisé en ce que** le système de chauffage (14) est une couche électroconductrice de type oxyde d'indium dopé à l'étain (ITO).

6. - Vitrage isolant selon l'une des revendications précédentes, **caractérisé en ce que** les feuilles de verre (11, 13, 21, 23, 25) qui le constituent sont en verre sodocalcique, aluminosilicate ou borosilicate, éventuellement trempé thermiquement ou trempé chimiquement, ou en matériau polymère transparent tel que poly(méthacrylate de méthyle) (PMMA), polycarbonate (PC), polyuréthane ou polyurée (PU).

7. - Vitrage isolant selon l'une des revendications précédentes, **caractérisé en ce que** les couches adhésives intercalaires (12, 22, 24) qui le constituent sont en polyvinylbutyral (PVB), polyuréthane thermoplastique (TPU), éthylène acétate de vinyle (EVA), éventuellement multicouche telle qu'à fonction d'amortissement acoustique.

8. - Vitrage isolant selon l'une des revendications précédentes, **caractérisé en ce que** la lame d'air (4) est séparée du volume extérieur au vitrage isolant du côté du premier vitrage feuilleté (1) de manière hermétique et étanche au moyen d'une membrane souple gonflable.

9. - Application d'un vitrage isolant selon l'une des revendications précédentes comme vitrage de véhicule aérien, le premier vitrage feuilleté (1) étant orienté vers le volume intérieur du véhicule et le second vitrage feuilleté (2) vers l'atmosphère extérieure.

10. - Application selon la revendication 9 comme vitrage latéral de cockpit d'avion.

## Patentansprüche

1. Isolierverglasung, bestehend aus einer ersten Verbundverglasung (1), die aus zwei Glasscheiben (11, 13) mit einer Dicke von jeweils höchstens gleich 2 mm gebildet ist, die mittels einer dazwischenliegenden Klebeschicht (12) miteinander verklebt sind, einer zweiten, strukturellen Verbundverglasung (2), die die unter Bedingungen eines Fluges erforderliche mechanische Festigkeit sicherstellt, insbesondere die Vogelschlagfestigkeit und eine gute Beherrschung der Verformung der Verglasung unter den bei einem Flug auftretenden Bedingungen eines Druckunterschieds auf beiden Seiten der Isolierverglasung, und einer Gasschicht (4) zwischen der ersten (1) und der zweiten (2) Verbundverglasung, wobei die erste Verbundverglasung (1) mit einem Heizsystem (14) versehen ist.

2. Isolierverglasung nach Anspruch 1, **dadurch gekennzeichnet, dass** die erste Verbundverglasung (1) und die zweite Verbundverglasung (2) mittels eines Abstandshalters (3), insbesondere in Form eines Rahmens, so zusammengehalten werden, dass die Gasschicht (4) zwischen der ersten Verbundverglasung (1) und der zweiten Verbundverglasung (2) gebildet wird.

3. Isolierverglasung nach einem der vorstehenden Ansprüche,
**dadurch gekennzeichnet, dass** die zweite, strukturelle Verbundverglasung (2) mindestens eine Glasscheibe (23) mit einer Dicke von mindestens 4 mm umfasst, die auf beiden Seiten einen Verbund mittels einer dazwischenliegenden Klebeschicht (22) mit einer Glasscheibe (21) und mittels einer dazwischenliegenden Klebeschicht (24) mit einer Glasscheibe (25) aufweist.

4. Isolierverglasung nach einem der vorstehenden Ansprüche,
**dadurch gekennzeichnet, dass** die zwei Glasscheiben (11, 13), die die erste Verbundverglasung (1) bilden, jeweils eine Dicke von höchstens 1,5, vorzugsweise 1 und besonders bevorzugt 0,8 mm aufweisen.

5. Isolierverglasung nach einem der vorstehenden Ansprüche,
**dadurch gekennzeichnet, dass** das Heizsystem (14) eine elektrisch leitfähige Schicht vom Typ zinndotiertes Indiumoxid (ITO) ist.

6. Isolierverglasung nach einem der vorstehenden Ansprüche,
**dadurch gekennzeichnet, dass** die Glasscheiben (11, 13, 21, 23, 25), aus denen sie besteht, aus Kalknatronglas, Aluminosilicat oder Borosilicat, gegebenenfalls thermisch vorgespannt oder chemisch vorgespannt, oder aus durchsichtigem Polymermaterial wie Poly(methylmethacrylat) (PMMA), Polycarbonat (PC), Polyurethan oder Polyharnstoff (PU) sind.

7. Isolierverglasung nach einem der vorstehenden Ansprüche,
**dadurch gekennzeichnet, dass** die dazwischenliegenden Klebeschichten (12, 22, 24), die sie bilden, aus Polyvinylbutyral (PVB), thermoplastischem Polyurethan (TPU), Ethylenvinylacetat (EVA), gegebenenfalls mehrschichtig, wie mit akustisch dämpfender Funktion, sind.

8. Isolierverglasung nach einem der vorstehenden Ansprüche,
**dadurch gekennzeichnet, dass** die Luftschicht (4) auf der Seite der ersten Verbundverglasung (1) in Bezug auf den Raum außerhalb der Isolierverglasung mittels einer aufblähbaren flexiblen Membran hermetisch und dicht abgeschlossen ist.

9. Verwendung einer Isolierverglasung nach einem der vorstehenden Ansprüche als Verglasung eines Luftfahrzeugs, wobei die erste Verbundverglasung (1) dem Innenraum des Luftfahrzeugs zugewandt ist und die zweite Verbundverglasung (2) der äußeren Atmosphäre zugewandt ist.

10. Verwendung nach Anspruch 9 als Seitenverglasung eines Flugzeugcockpits.

## Claims

1. An insulated glazing unit comprising a first laminated pane (1) comprising two glass sheets (11, 13), each no more than 2 mm thick, that are bonded to one another by an intermediate adhesive layer (12), a second structural laminated pane (2) providing the mechanical strength required for the flight conditions, in particular resistance to bird strike and control of glazing unit deformation under pressure difference conditions during a flight on either side of the insulated glazing unit, and a gas gap (4) between the first and second laminated panes (1, 2), the first laminated pane (1) being provided with a heating system (14).

2. The insulated glazing unit as claimed in claim 1, **characterized in that** the first and second laminated panes (1, 2) are held together by a spacer (3), in particular a frame-shaped spacer, such as to form the gas gap (4) between the first and second laminated panes (1, 2) .

3. The insulated glazing unit as claimed in one of the preceding claims, **characterized in that** the second structural laminated pane (2) has at least one glass sheet (23) at least 4 mm thick, laminated on either side to a glass sheet (21) by means of an intermediate adhesive layer (22) and to a glass sheet (25) by means of an intermediate adhesive layer (24).

4. The insulated glazing unit as claimed in one of the preceding claims, **characterized in that** each of the two glass sheets (11, 13) forming the first laminated pane (1) is at least 1.5 mm thick, and preferably 1 mm thick, and particularly preferably 0.8 mm thick.

5. The insulated glazing unit as claimed in one of the preceding claims, **characterized in that** the heating system (14) is a tin-doped indium oxide (ITO) electrically conductive layer.

6. The insulated glazing unit as claimed in one of the preceding claims, **characterized in that** the glass sheets (11, 13, 21, 23, 25) forming said glazing unit are made of soda-lime, aluminosilicate or borosilicate glass, optionally tempered thermally or chemically, or of a transparent polymer material such as poly (methyl methacrylate) (PMMA), polycarbonate (PC), polyurethane or polyurea (PU).

7. The insulated glazing unit as claimed in one of the preceding claims, **characterized in that** the intermediate adhesive layers (12, 22, 24) forming said glazing unit are made of polyvinyl butyral (PVB), thermoplastic polyurethane (TPU), ethylene-vinyl acetate (EVA), optionally multilayer such as to provide sound damping.

8. The insulated glazing unit as claimed in one of the preceding claims, **characterized in that** the air gap (4) is hermetically and sealingly separated from the volume outside the insulated glazing unit on the side of the first laminated pane (1) by a flexible inflatable membrane.

9. The use of an insulated glazing unit as claimed in one of the preceding claims as an aircraft glazing unit, the first laminated pane (1) being oriented towards the internal volume of the aircraft and the second laminated pane (2) being oriented towards the outside atmosphere.

10. The use as claimed in claim 9 as an airplane cockpit lateral glazing unit.
